# EUROPEAN PATENT SPECIFICATION

(11) **EP 3 258 328 B1**
(45) Date of publication and mention of the grant of the patent: **13.12.2023**
(21) Application number: 16776403.4
(22) Date of filing: 23.03.2016
(51) Int. Cl.: G05B 19/05, H04B 3/54

(54) **PLC CONTROL DATA GENERATION DEVICE, PLC CONTROL DATA GENERATION METHOD, AND PLC CONTROL DATA GENERATION PROGRAM**
VORRICHTUNG ZUR ERZEUGUNG VON PLC-STEUERDATEN, VERFAHREN ZUR ERZEUGUNG VON PLC-STEUERDATEN UND PROGRAMM ZUR ERZEUGUNG VON PLC-STEUERDATEN
DISPOSITIF DE GÉNÉRATION DE DONNÉES DE COMMANDE DE PLC, PROCÉDÉ DE GÉNÉRATION DE DONNÉES DE COMMANDE DE PLC, ET PROGRAMME DE GÉNÉRATION DE DONNÉES DE COMMANDE DE PLC

(30) Priority: 06.04.2015 JP 2015078087
(43) Date of publication of application: 20.12.2017
(73) Proprietor: Omron Corporation, Kyoto-shi, Kyoto 600-8530 (JP)
(72) Inventor: MURAYAMA, Shinji, Kyoto-shi Kyoto 600-8530 (JP)
(74) Representative: Horn Kleimann Waitzhofer Schmid-Dreyer Patent- und Rechtsanwälte PartG mbB
(86) International application number: PCT/JP2016/059198
(87) International publication number: WO 2016/163235

(56) References cited:
- EP-A2- 1 868 055
- JP-A- H07 248 809
- JP-A- 2004 341 824
- JP-A- 2013 054 636
- US-A1- 2008 312 877
- US-A1- 2009 077 055
- US-B2- 8 306 658

## Description

### TECHNICAL FIELD

The present invention relates to a programmable logic controller (PLC) control data generation device that is communicably connected to a PLC, a PLC control data generation method of the PLC control data generation device, and a PLC control data generation program executed by the PLC control data generation device.

### BACKGROUND ART

EtherCAT is known as an industrial open network. EtherCAT is used as a field network. An IO-Link system constructed with a master that conducts point-to-point communication with a device such as a sensor and an actuator is known.

A network system constructed with a programmable controller including a function as an EtherCAT master, a device including a function as an EtherCAT slave and a function of an IO-Link master, and an IO-Link device has been conventionally used.

A function block (setting value reading FB) that acquires an operation setting value of the IO-Link device from the IO-Link device and a function block (setting value writing FB) that reflects the operation setting value held by the PLC in the IO-Link device are mounted on the PLC.

In the case that the vendor of the PLC is identical to the vendor of the device, a user can change the setting data of the IO-Link device using a predetermined tool application installed in the personal computer by connecting the personal computer to the PLC.

In the case that the vendor of the PLC is not identical to the vendor of the device, the user can change the setting data of the IO-Link device using a predetermined tool application installed in the personal computer by directly connecting the personal computer to the IO-Link device.
EP 1 868 055 A2 discloses systems and methods for safety data writes for process control networks are disclosed. The system may load changed parameters into a function block implemented by a process control server. The loaded changed parameters may be verified as being within safe limits and correctly entered. The verified changed parameters may be loaded into the field device controllers and the system restarted using the loaded changed parameters. The system may load parameters with an online system and use the loaded changed parameters during a warm restart.

### SUMMARY OF THE INVENTION

### PROBLEMS TO BE SOLVED BY THE INVENTION

During actual operation of the network system, usually an on-site operator who changes the setting of the IO-Link device in order to cause the IO-Link device to perform desired operation is not familiar with the tool application.

In order that the on-site operator can easily change the setting of the IO-Link device, it is considered that a system manager performs the following work before the actual operation of the network system.
1. The system manager checks whether the IO-Link device performs the desired operation by changing the setting data using the tool application.
2. The system manager causes the PLC to acquire the operation setting value from the IO-Link device when checking whether the IO-Link device performs the desired operation. That is, the system manager causes the PLC to perform the setting value reading FB.

Therefore, the on-site operator can cause the IO-Link device to perform the desired operation only by performing operation to cause the PLC to perform the setting value writing FB during the actual operation of the network system.

However, the system manager cannot perform the work unless the IO-Link device is operated. That is, in order that the on-site operator can easily change the settings of many IO-Link devices during the actual operation of the network system, it is necessary for the system manager to perform test operation on each of the many IO-Link devices before the actual operation.

An object of the present invention is to make a PLC control data generation device that can simplify the pre-actual-operation work in which the on-site operator easily changes the setting of the control object device during the actual operation.

### MEANS FOR SOLVING THE PROBLEM

The problem is solved by a system and a method according to the independent claims.

### EFFECT OF THE INVENTION

In the configuration of the present invention, the work before the actual operation can be simplified in order that the on-site operator easily changes the setting of the control object device during the actual operation.

### BRIEF DESCRIPTION OF THE DRAWINGS

Fig. 1 is a block diagram illustrating a configuration of a main part of each personal computer (PC) and a programmable logic controller (PLC) according to a first embodiment of the present invention.
Fig. 2 is a view schematically illustrating a configuration of an industrial network system of the first embodiment including the PC and PLC in Fig. 1.
Fig. 3 is a view illustrating an example of a tool application screen displayed on a display of the PC in Fig. 1.
Fig. 4 is a view illustrating another example of the tool application screen displayed on the display of the PC in Fig. 1.
Fig. 5 is a view illustrating still another example of the tool application screen displayed on the display of the PC in Fig. 1.
Fig. 6 is a view illustrating a data structure of a setting data file produced by the PC in Fig. 1.
Fig. 7 is a view illustrating a setting value writing FB performed by the PLC in Fig. 1 to change an operation setting value of an IO-Link device that is of a control object device.
Fig. 8 is another view illustrating the setting value writing FB.
Fig. 9 is a view schematically illustrating a configuration of an industrial network system according to a second embodiment including a PC of the second embodiment and the PLC of the first embodiment.

### MODES FOR CARRYING OUT THE INVENTION

### <First Embodiment>

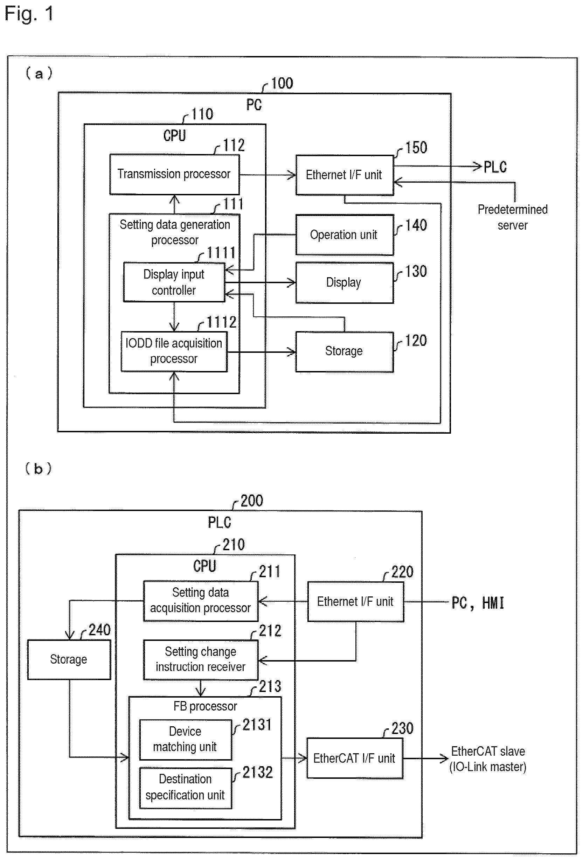

An industrial network system according to a first embodiment of the present invention will be described below with reference to Figs. 1 to 8.

### (System outline and configuration)

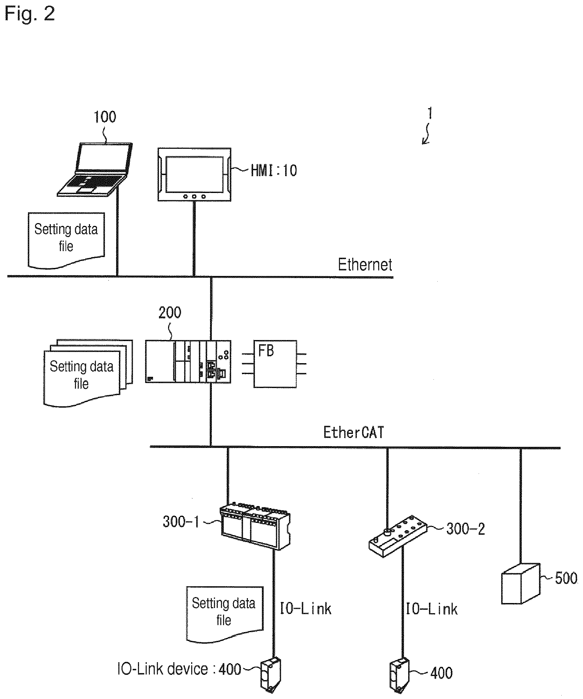

An outline and a configuration of the industrial network system of the first embodiment will be described with reference to Figs. 1 and 2.

Fig. 1 is a block diagram illustrating a PC 100 (PLC control data generation device) and a PLC 200 of the first embodiment. Fig. 2 is a view illustrating a configuration of an industrial network system 1 of the first embodiment.

As can be seen from Figs. 1 and 2, the industrial network system 1 includes a human machine interface (HMI) 10, a personal computer (PC) 100, a programmable logic controller (PLC) 200, slave devices 300-1 and 300-2, an IO-Link device 400 (hereinafter, also referred to as a "device 400" or a "control object device"), and a slave device 500 (hereinafter, also referred to as a "device 500" or a "control object device").

The HMI 10 is a device that is used to change an operation setting of the IO-Link device 400 by an on-site operator. A touch panel type display is provided in the HMI 10.

Many UI components are displayed on the display during the actual operation of the industrial network system 1. The on-site operator touches the proper UI component (specific UI component) selected from many UI components, which allows the on-site operator to cause a desired device 400 (control object device) in plural devices 400 to perform desired operation in predetermined plural kinds of operation.

When receiving a touch operation on the UI component, the HMI 10 issues an instruction to the PLC 200 to perform the control such that the desired device 400 performs desired operation. That is, the HMI 10 transmits instruction data indicating a specific content of the instruction to the PLC 200.

The PC 100 is a personal computer that is used by a system manager in order to produce a setting data file including various operation setting values used to cause the device 400 to perform desired operation and to record the produced setting data file in the PLC 200.

The PLC 200 is an EtherCAT master, and conducts EtherCAT communication with the slave device.

The PLC 200 holds a function block (setting value writing FB) having a function of changing various operation setting values of the device 400 (control object device).

When the PLC 200 calls the setting value writing FB with an instruction (setting change instruction) from the HMI 10 as a trigger, the setting value writing FB performs the following operation. That is, the setting value writing FB refers to a specific setting data file corresponding to the specific UI component in many setting data files held by the PLC 200, and transmits the referred-to setting data file to the control object device.

The slave device (device 300-1, device 300-2) acts as an EtherCAT slave and an IO-Link master. The slave device transfers the setting data file to the IO-Link device 400 when acquiring the setting data file from the PLC 200 in order to change the operation setting value of the IO-Link device 400 point-to-point connected to own device.

The devices 300-1 and 300-2 will more specifically be described below.

The device 300-1 is a device in which plural functional units are connected through a system bus while being able to exchange data with each other. One of the plural functional units controls communication with the EtherCAT master and data exchange with other functional units through the system bus. Another one of the plural functional units is operated as the IO-Link master that is connected to the IO-Link device 400 to conduct communication.

The device 300-2 includes a function of conducting communication with the EtherCAT master and a function of conducting communication with the IO-Link device 400.

When the setting data file is transferred to the IO-Link device 400, the device 400 changes various operation setting values of the own device based on a content of the setting data file, and performs the operation desired by the on-site operator.

The device 500 is a control object device (for example, a sensor and an actuator) that acts as not the IO-Link master but the EtherCAT slave.

Configurations of the PC 100 and PLC 200 will be described below with reference to Fig. 1.

### (Configuration of PC 100)

As illustrated in (a) of Fig. 1, the PC 100 includes a CPU 110, a storage 120, a display 130, an operation unit 140, and an Ethernet (registered trademark) I/F unit 150.

The CPU 110 integrally controls a whole of the PC 100.

The storage 120 is a recording medium in which a predetermined tool application (an application for producing the setting data file of data (PLC control data) that causes the PLC 200 to control the device 400) is installed. The setting data file produced by the tool application (PLC control data generation program) is also stored in the storage 120. Details of the tool application will be described later.

The display 130 is a display screen on which a screen of the tool application is displayed.

The operation unit 140 is an operation device (such as a keyboard) that operates the tool application.

The Ethernet I/F unit 150 is a communication interface that conducts Ethernet communication (TCP/IP communication).

The CPU 110 acts as a setting data generation processor 111 (setting data generator) and a transmission processor 112 (transmitter) by reading the tool application.

The setting data generation processor 111 generates a setting data file that is referred to by a setting value writing FB of the PLC 200.

The setting data generation processor 111 includes a display input controller 1111 and an IODD file acquisition processor 1112 (item information acquisition unit).

The display input controller 1111 produces the setting data file from an IODD file (operation setting item information) that is of a file related to at least one item indicating the operation setting value of the device 400, and displays a tool application screen indicating at least one item in the setting data file on the display 130. The display input controller 1111 also control setting of a value of the item by input from a user.

The IODD file acquisition processor 1112 acquires an IODD file from an outside (in the first embodiment, a predetermined server). The IODD file of the first embodiment is a file in which a value settable for the functional item and a default operation setting value of the functional item in each functional item of the device 400 are indicated.

The transmission processor 112 transmits the setting data file generated by the setting data generation processor 111 to the PLC 200.

### (Configuration of PLC 200)

As illustrated in (b) of Fig. 1, the PLC 200 includes a CPU 210, an Ethernet I/F unit 220, an EtherCAT I/F unit 230, and a storage 240.

The CPU 210 integrally controls a whole of the PLC 200.

The Ethernet I/F unit 220 is a communication interface that conducts Ethernet communication (TCP/IP communication).

The EtherCAT I/F unit 230 is a communication interface that conducts EtherCAT communication.

The storage 240 is a recording medium in which various FBs such as a setting value reading FB and the setting value writing FB are recorded. The setting data file transmitted from the PC 100 is also recorded in the storage 240.

The CPU 210 acts as a setting data acquisition processor 211, a setting change instruction receiver 212, and an FB processor 213.

The setting data acquisition processor 211 acquires the setting data file transmitted from the PC 100 to the PLC 200, and records the acquired setting data file in the storage 240.

The setting change instruction receiver 212 causes the FB processor 213 to call the setting value writing FB with the setting change instruction from the HMI 10 as the trigger.

The FB processor 213 reads various FBs, and performs the read FB.

In the case that the FB processor 213 calls the setting value writing FB by the setting change instruction from the HMI 10, the setting value writing FB reads the specific setting data file corresponding to the content of the setting change instruction from the storage 120, and transmits the read setting data file to an EtherCAT network (the slave device connected to the control object device).

The FB processor 213 includes a device matching unit 2131 and a destination specification unit 2132.

In the case that a predetermined input variable of the setting value writing FB is a predetermined value, the device matching unit 2131 acquires a vendor ID and a device ID from the device 400 designated by the on-site operator. When a vendor ID stored in the setting data file is matched with the vendor ID acquired from the device 400, and when a device ID stored in the setting data file is matched with the device ID acquired from the device 400, the device matching unit 2131 outputs information indicating "successful matching", and outputs information indicating "failed matching" otherwise.

In the first embodiment, the device matching unit 2131 can change whether the matching processing is performed according to the setting of the industrial network system 1.

The destination specification unit 2132 specifies a destination of the control object device by a method based on the setting change instruction from the HMI 10.

### (Method 1)

The destination of the control object device is specified based on destination information included in the specific setting data file. In this case, the "specific setting data file" is, for example, a file having a file name indicating a name of the control object device and the content of the post-setting-change operation, and is a setting data file including the destination information and various operation setting values corresponding to the post-setting-change operation.

### (Method 2)

The destination of the control object device is specified based on separately-designated destination information (destination information included in the instruction data from the HMI 10). In this case, the "specific setting data file" is, for example, a file having a file name indicating the content of the post-setting-change operation, and is a setting data file including the destination information and various operation setting values corresponding to the post-setting-change operation.

The destination specification unit 2132 can appropriately switch the method 1 and the method 2 according to the setting of the industrial network system 1.

The destination information of the first embodiment is one of, a combination of any two from among, or a combination of (1) a node address of the EtherCAT network managed by the PLC 200, (2) a unit number of a device (not illustrated) including plural units, the device being connected to the PLC 200, and (3) a port number of the slave device including plural ports, the slave device being connected to the PLC 200. Examples of the destination information include a combination of a node address and a unit number and a combination of the node address and a port number.

The configurations of the PC 100 and PLC 200 are described above.

### (Production of setting data file)

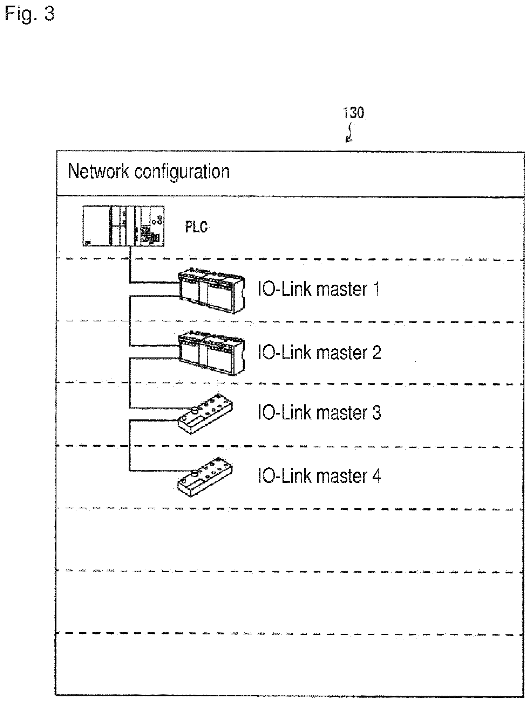

How to produce the setting data file using the tool application installed in the PC 100 will be described in detail with reference to Figs. 3 to 5. Figs. 3 to 5 are views illustrating a screen of the tool application.

When the PC 100 starts up the tool application, the tool application (display input controller 1111) detects the PLC 200 and at least one slave device in the industrial network system 1, and displays a screen indicating a network configuration on the display 130 based on a detection result as illustrated in Fig. 3.

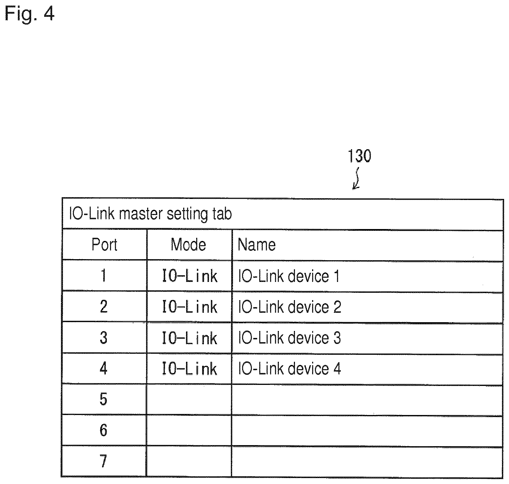

When a user (system manager) performs operation to select the slave device that acts as the IO-Link master through the screen in Fig. 3, the tool application (display input controller 1111) detects at least one device 400 connected to the selected slave device, and displays a list of at least one detected device 400 on the display 130 as illustrated in Fig. 4.

When the user performs operation to select the device 400 (IO-Link device 400) through the screen in Fig. 4, the tool application (IODD file acquisition processor 1112) downloads the IODD file related to the selected device 400 from a predetermined server.

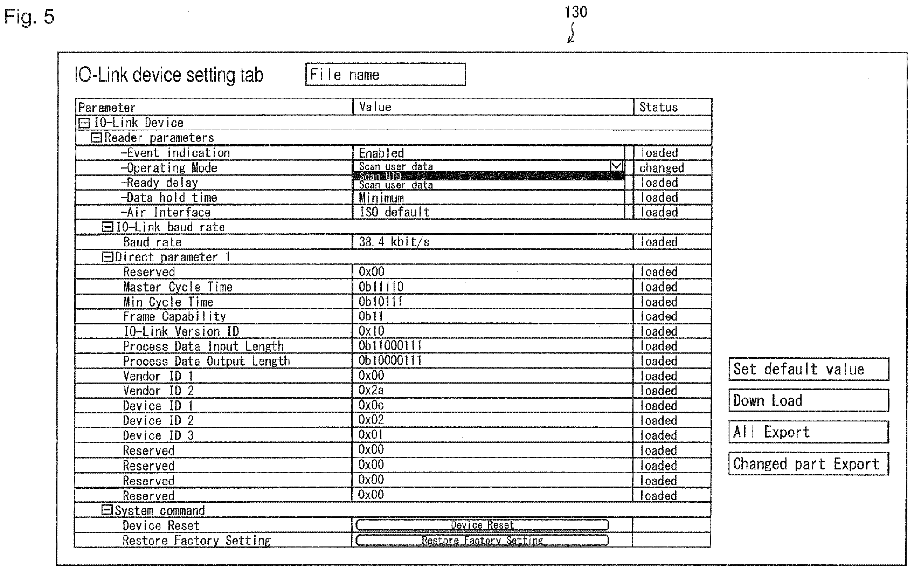

The tool application (display input controller 1111) reads the downloaded IODD file, and displays a screen in Fig. 5 on the display 130.

When the user presses an "ALL EXPORT" button or a "Changed part Export" button after changing various operation setting values related to the device 400 through the screen in Fig. 5 to input a file name to a text box in an upper portion of the screen, the tool application (setting data generation processor 111) generates the setting data file that reflects the change of the operation setting values of various items , the setting data file having the input file name (setting data generation step).

Specifically, the setting data generation processor 111 generates the setting data file including information (all the pieces of setting data related to the device 400) about all the items when the "ALL EXPORT" button is pressed, and generates the setting data file including not the operation setting values of the not-changed items but the operation setting values of the changed items when the "Changed part Export" button is pressed.

The tool application (transmission processor 112) transmits the generated setting data file to the PLC 200 (transmission step).

The user can produce N setting data files by performing the above work at least N (N ≥ 1) times with respect to the selected device 400. That is, the user can produce the setting data file including the operation setting value used to cause the selected device 400 to perform the operation with respect to each of N kinds of the operation.

### (Supplementary information 1 related to screen in Fig. 5)

A "Set default value" button on the screen in Fig. 5 is a button that returns the operation setting values of all the items to default values. A "Down Load" button on the screen in Fig. 5 is a button, which causes the tool application (change data generator) to generate operation setting value change data (data used to directly change the operation setting value of the control object device from the PC 100) including the information about all the items, and to directly transmit (download) the generated operation setting value change data to the control object device.

### (Supplementary information 2 related to screen in Fig. 5)

A screen in which a third button for export is provided may be displayed on the screen in Fig. 5 when the user performs the operation to select the device 400. When the third button is pressed, the setting data generation processor 111 may generate the setting data file including information (part of the setting data related to the device 400) about a predetermined part of the items.

### (Details of setting data file)

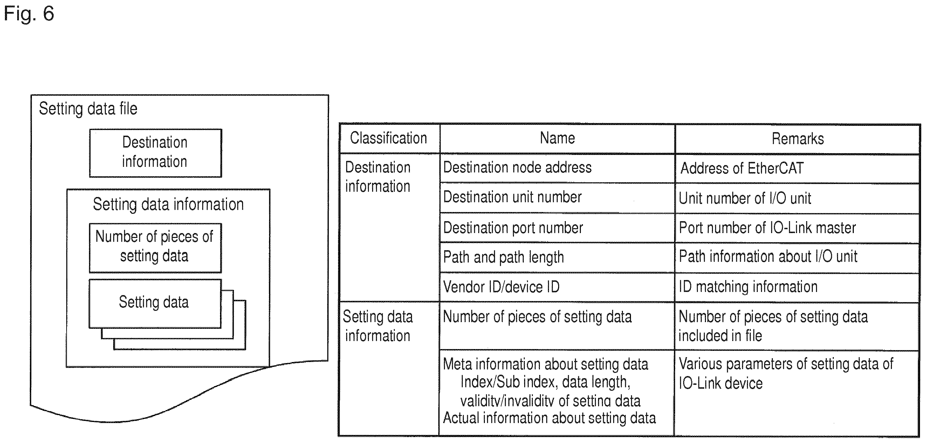

Details of the setting data file will be described with reference to Fig. 6. Fig. 6 is a view illustrating a data structure of the setting data file produced by the PC 100.

As illustrated in Fig. 6, the setting data file includes destination information and setting data information. As illustrated in Fig. 6, the destination information includes various pieces of information about the destination of the control object device, and the setting data information includes at least one piece of setting data and information indicating the number of pieces of setting data included in the setting data file.

The setting data includes meta information and actual information, and the meta information about the setting data includes various pieces of information (such as a data length of the actual information) related to the actual information about the setting data.

### (Details of instruction data and setting value writing FB)

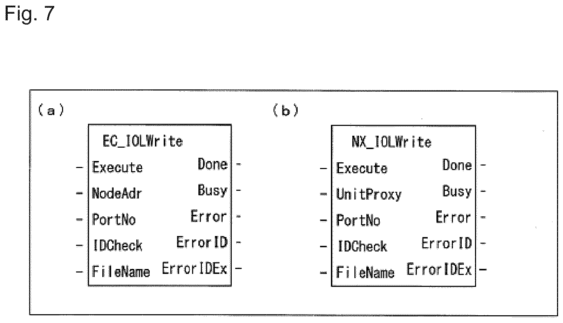

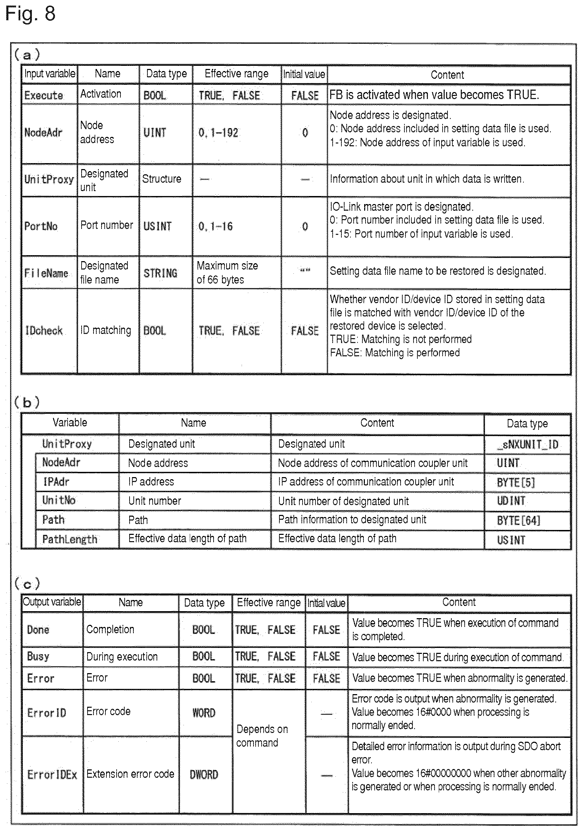

Details of the instruction data and setting value writing FB will be described with reference to Figs. 7 and 8. Figs. 7 and 8 are views illustrating the setting value writing FB. In the first embodiment, the PLC 200 uses EC_IOLWRITE in (a) of Fig. 7 and/or NX_IOLWRITE in Fig. 7(b) as the setting value writing FB.

As can be seen from Figs. 7 and 8, EC_IOLWRITE and NX_IOLWRITE operate by receiving five input variables. The five input variables are included in the instruction data.
(a) to (c) of Figs. 8 illustrate details of the five input variables. In the first embodiment, because four input variables of NodeAdr, UnitProxy, PortNo, and IDcheck have features in input variables of Fig. 8, the four input variables will be described in detail below.

### (Variable NodeAdr and variable UnitProxy)

The variable NodeAdr is a variable that is referred to by EC_IOLWRITE in order to specify the destination of the control object device (the device 400).

The variable UnitProxy is a variable that is referred to by NX_IOLWRITE in order to specify the destination of the control object device. As illustrated in (b) of Fig. 8, the variable UnitProxy is a structure type variable, and one of plural member variables of the variable UnitProxy is the variable NodeAdr.

In the case that the destination of the control object device is set by the method 1, the HMI 10 transmits the instruction data including a value "0" of the variable NodeAdr to the PLC 200. In the case that the destination of the control object device is set by the method 2, the HMI 10 transmits the instruction data including a value i (i is an integer of 1 to 192) of the variable NodeAdr to the PLC 200.

As can be seen from (a) of Fig. 7 and (a) of Fig. 8, EC_IOLWRITE specifies the destination based on the node address included in the setting data file in the case that the input variable NodeAdr included in the instruction data is the value "0", and EC_IOLWRITE specifies the destination based on the value of the input variable NodeAdr in the case that the input variable NodeAdr is not the value "0".

As can be seen from (b) of Fig. 7 and (b) of Fig. 8, NX_IOLWRITE specifies the destination based on the node address included in the setting data file in the case that the member variable NodeAdr included in the instruction data is the value "0", and NX_IOLWRITE specifies the destination based on the value of the member variable NodeAdr in the case that the member variable NodeAdr is not the value "0".

### (Variable PortNo)

The variable PortNo is a variable that is referred to by EC_IOLWRITE and NX_IOLWRITE in order to specify the destination of the control object device.

In the case that the destination of the control object device is set by the method 1, the HMI 10 transmits the instruction data including the value "0" of the variable PortNo to the PLC 200. In the case that the destination of the control object device is set by the method 2, the HMI 10 transmits the instruction data including a value j (j is an integer of 1 to 16) of the variable PortNo to the PLC 200.

As can be seen from (a) Fig. 7 and (a) of Fig. 8, EC_IOLWRITE (NX_IOLWRITE) specifies the destination based on the port number included in the setting data file in the case that the variable PortNo included in the instruction data is the value "0", and EC_IOLWRITE specifies the destination based on the value of the variable PortNo in the case that the variable PortNo is not the value "0".

### (Variable IDcheck)

The variable IDcheck is a variable that is referred to by EC_IOLWRITE and NX_IOLWRITE in order to determine whether the matching processing is performed. That is, the variable IDcheck is the "predetermined input variable".

The HMI 10 transmits the instruction data including a value "FALSE" (the "predetermined value") of the variable IDcheck to the PLC 200 in the case that the performance of the matching processing is set to be valid, and the HMI 10 transmits the instruction data including a value "TRUE" of the variable IDcheck to the PLC 200 in the case that the performance of the matching processing is set to be invalid.

As can be seen from (a) of Fig. 7 and (a) of Fig. 8, EC_IOLWRITE (NX_IOLWRITE) determines that the matching processing is performed in the case that the variable IDcheck is the value "FALSE", and EC_IOLWRITE(NX_IOLWRITE) determines that the matching processing is not performed in the case that the variable IDcheck is the value ""TRUE".

EC_IOLWRITE(NX_IOLWRITE) performs the matching processing when the determination that the matching processing is performed is made.

As a result of the performance of the matching processing, when the vendor ID stored in the setting data file is not matched with the vendor ID acquired from the device 400, or when the device ID stored in the setting data file is not matched with the device ID acquired from the device 400, EC_IOLWRITE(NX_IOLWRITE) outputs the information indicating "failed matching". That is, EC_IOLWRITE and NX_IOLWRITE output five output variables in (c) of Fig. 8 including an output variable ErrorID indicating "failed matching".

On the other hand, as a result of the performance of the matching processing in the device matching step, when the vendor ID stored in the setting data file is matched with the vendor ID acquired from the device 400, and when the device ID stored in the setting data file is matched with the device ID acquired from the device 400, EC_IOLWRITE(NX_IOLWRITE) outputs the information indicating "successful matching". EC_IOLWRITE(NX_IOLWRITE) transmits the setting data file to the EtherCAT network (the slave device connected to the control object device) in the case that EC_IOLWRITE(NX_IOLWRITE) outputs the information indicating "successful matching".

### (Other variables)

An input variable FileName is a variable indicating a file name of the "specific setting data file" (that is, the setting data file to be restored by the control object device), which should be read from the storage 240 by EC_IOLWRITE(NX_IOLWRITE) and transmitted to the control object device.

The details of the instruction data and setting value writing FB are described above.

As a result of the above processing performed by the setting value writing FB, the control object device receives and records the setting data file to be restored, and changes the operation setting value of the own device based on the restored setting data file. That is, the control object device performs the operation desired by the on-site operator.

### <Second Embodiment>

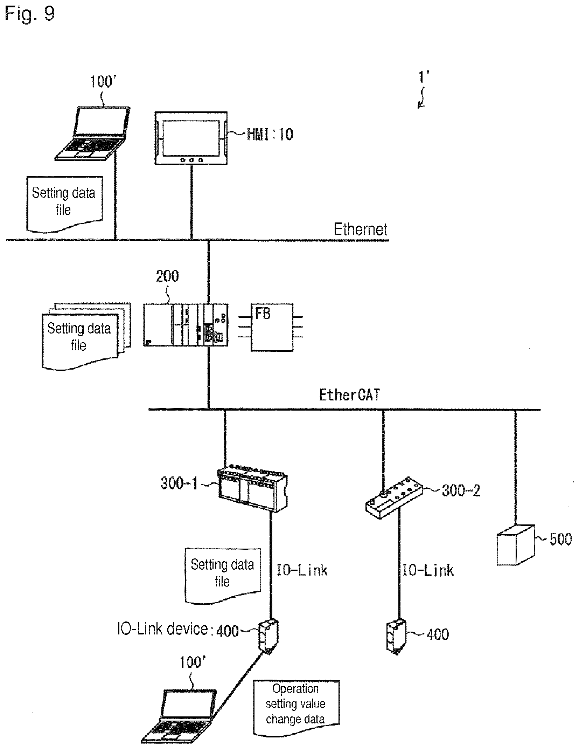

An industrial network system according to a second embodiment of the present invention will be described below with reference to Fig. 9. The component having the same or substantially same function as the first embodiment is basically designated by the same symbol for convenience sake, and the description will be omitted.

Fig. 9 is a view illustrating a configuration of the industrial network system of the second embodiment.

As illustrated in Fig. 9, an industrial network system 1' of the second embodiment includes a PC 100' instead of the PC 100 of the first embodiment.

The PC 100' differs from the PC 100 in the following point.

In the case that the user performs the operation to select the device 400 on the screen in Fig. 4, the tool application of the PC 100' displays a screen in which a fourth button and a fifth button for download are provided in the screen of Fig. 5.

The tool application performs the following processing in the case that the fourth button or the fifth button is pressed while the PC 100' and the control object device are directly connected to each other by a cable.

That is, in the case that the fourth button is pressed, the tool application (change data generator) generates the operation setting value change data (data used to directly change the operation setting value of the control object device from the PC 100') including the information about a predetermined part of the items, and transmits (downloads) the generated operation setting value change data to the device 400.

Similarly, in the case that the fifth button is pressed, the tool application (change data generator) generates the operation setting value change data including not the operation setting value of the not-changed items but the operation setting value of the changed items, and transmits (downloads) the generated operation setting value change data to the device 400.

### (Modifications of first and second embodiments)

A site where the industrial network system is installed may be divided into plural sections. One device 400 or plural devices 400 of the same kind may be installed in each section.

In this case, the HMI 10 may display the UI component that causes all the devices 400 (control object devices) installed in an object section to perform the desired operation with respect to each of the plural sections. The system manager may set the industrial network system such that the PLC 200 adopts the method 2 in order to specify the destination of the device 400.

When the on-site operator performs the operation to tap a specific UI component, the HMI 10 may generate the instruction data including "the variable NodeAdr indicating the node address of the device 400" with respect to all the devices 400 (Q control object devices) in the section corresponding to the UI component.

When the PLC 200 acquires the instruction data generated by the HMI 10, the destination specification unit 2132 may refer to each (separately-designated information) of the Q variables NodeAdr included in the instruction data, and specify plural (Q) destinations of the control object device based on the separately-designated information.

In the modification, the system manager may produce the setting data files as many as the number of kinds of the operation that the on-site operator desires using the device 400 installed in the object section in each section.

That is, in the modification, the system manager needs not to produce the setting data files as many as the number of kinds of the operation that the on-site operator desires using the object device 400 in each device.

Accordingly, in the modification, the system manager can produce all the necessary setting data files with less labor and time.

### <Third Embodiment>

The PCs (PCs 100 and 100') of the first and second embodiments and a control block (particularly, the setting data generation processor 111, the transmission processor 112, and the FB processor 213) of the PLC 200 may be constructed with a logic circuit (hardware) formed in an integrated circuit (IC chip), or implemented by software using a central processing unit (CPU).

In the latter, the PCs and the PLC include the CPU that executes a command of the program that is of the software implementing each function, a read only memory (ROM) or a storage device (referred to as a recording medium) in which the program and various pieces of data are stored while being readable by a computer (or the CPU), and a random access memory (RAM) in which the program is expanded. The computer (or the CPU) reads the program from the recording medium, and executes the program, thereby achieving the object of the present invention. A "non-transient physical medium" such as a tape, a disk, a card, a semiconductor memory, and a programmable logic circuit can be used as the recording medium. The program may be supplied to the computer through any transmission medium (such as a communication network and a broadcasting wave) in which the program can be transmitted. The present invention can be made in a form of a data signal embedded in a carrier wave, the data signal being materialized by electronic transmission of the program.

### [Summary]

One aspect of the present invention is a system defined by claim 1 comprising a programmable logic controller (PLC) control data generation device.

Conventionally, there have been three following methods for changing the operation setting value of the control object device controlled by the PLC. The first method is a method that is performed by directly connecting the control object device and the PC executing the program that can change the operation setting value of the control object device.

For the second method, at first the PLC previously reads the operation setting value from the control object device of an operation setting value change object using the setting value reading FB, and stores the operation setting value. Then, the operation setting value is appropriately read using the setting value writing FB, and the operation setting value of the control object device is changed.

The third method is a method for changing the operation setting value of the control object device using the program through the PLC via the network.

For the first method, it is necessary that the control object device and the PC are directly connected to each other. Therefore, the change becomes complicated for many control object devices. The operation setting value cannot be changed during the operation of the control object device.

For the second method, it is necessary to read the operation setting value using the setting value reading FB while the control object device is previously set to a predetermined operation setting value. It is necessary to perform the work necessary times as variations of the operation setting value, and the work becomes complicated.

On the other hand, in the configuration, the setting data of the FB of the PLC control data generation device is generated, and the setting data is transmitted to and stored in the PLC. In the PLC, the setting value writing FB operates based on the stored setting data, thereby changing the operation setting value of the control object device. Therefore, compared with the first and second methods, the work to change the operation setting value of the control object device can largely be simplified.

The third method is a method for changing the operation setting value while the control object device operates (that is, during the actual operation of the system). However, it is necessary that the on-site operator call the system manager every time the on-site operator desires to change the operation setting value of the control object device.

On the other hand, according to the configuration, the on-site operator can change the operation setting value of the control object device without calling the system manager.

In the configuration, the operation setting value of the control object device can be changed by the operation to cause the PLC to perform the FB. Therefore, the on-site operator who performs the operation can easily change the operation setting value during the actual operation of the control object device.

In order to solve the problem, according to another aspect of the present invention, a programmable logic controller (PLC) control data generation method is defined by independent method claim 5.

According to the configuration, the PLC control data generation method has the advantageous effect similar to that of the system comprising the PLC control data generation device.

In the PLC control data generation device of the system according to the present invention, the setting data generator includes a display input controller that displays at least one item in the setting data on a display screen and controls setting of a value of the item by input from a user.

According to the configuration, the user can input and set a value of each item while seeing the item of the setting data displayed on the display screen.

The PLC control data generation device of the system according to the present invention may further include an item information acquisition unit configured to acquire operation setting item information about at least one item indicating the operation setting value of the control object device from an outside. The setting data generator may generate the setting data based on the operation setting item information acquired by the item information acquisition unit.

According to the configuration, because the PLC control data generation device can acquire the operation setting item information from the outside, the user can easily produce the setting data corresponding to the operation setting value of the control object device.

In the PLC control data generation device of the system according to the present invention, the setting data generator may generate a setting data file including one of (1) information about all items, (2) information about a predetermined part of items, and (3) information about a changed item as the setting data based on an instruction from a user.

According to the configuration, the user can switch the item included in the setting data file. Therefore, the user can produce the setting data file having a proper data size according to a use situation.

The PLC control data generation device of the system according to the present invention may further include a change data generator configured to generate operation setting value change data directly changing the operation setting value of the control object device. The transmitter may transmit the operation setting value change data generated by the change data generator to the control object device.

According to the configuration, the PLC control data generation device can directly change the operation setting value of the control object device. That is, the PLC control data generation device can change the operation setting value of the control object device through the FB of the PLC, or directly change the operation setting value of the control object device without use of the FB of the PLC. Therefore, the user can switch the both according to the situation, so that the PLC control data generation device can provide higher convenience to the user.

The present invention is not limited to the above embodiments, various changes can be made without departing from the scope of the claims, and an embodiment acquired by a combination of technical means disclosed in different embodiments is also included in the technical scope of the present invention. Additionally, a new technical feature can be made by a combination of technical means disclosed in the above embodiments.

### INDUSTRIAL APPLICABILITY

The present invention can suitably be used in the industrial network system.

### DESCRIPTION OF SYMBOLS

100, 100' PC (PLC control data generation device)
110 CPU
111 setting data generation processor (setting data generator)
112 transmission processor (transmitter)
1111 display input controller
1112IODD file acquisition processor (item information acquisition unit)
200 programmable logic controller (PLC)
210 CPU
213 FB processor
2131 device matching unit
2132 destination specification unit
240 storage
300-1, 300-2 slave device
400 IO-Link device (control object device)

## Claims

1. A system including a programmable logic controller (PLC) control data generation device (100), a PLC (200) including a function block (FB) and a control object device (400), the PLC control data generation device (100) comprising:
a setting data generator (111) configured to generate a setting data file that is to be referred to by the function block (FB) in the PLC (200); and
a transmitter (112) configured to transmit the setting data file generated by the setting data generator to the PLC (200),
wherein:
the setting data file generated by the setting data generator (111) is usable by the FB that is configured to change an operation setting value of the control object device (400) controlled by the PLC (200),
the FB is configured to transmit the setting data file to the control object device (400), and the control object device (400) is configured to rewrite the operation setting value of the control object device (400) based on the setting data file,
**characterized in that**
the FB is configured to change the operation setting value during actual operation of the control object device (400) controlled by the PLC (200),
the setting data generator (111) comprises a display input controller (1111) that is configured to display at least one item in the setting data file on a display screen and to control setting of a value of the item by input from a user,
the control object device (400) is an IO-Link device (400),
the setting data generator (111) further comprises an Input-Output Device Description (IODD) file acquisition processor (1112) configured to acquire, from an outside, an IODD file which is related to the control object device (400) and in which, for each functional item of the control object device (400), a value settable for that functional item and a default operation setting value for that functional item are indicated, and
the display input controller (1111) is further configured to produce the setting data file from the IODD file acquired by the file acquisition processor (1112) based on the input from the user.

2. The system according to claim 1, further comprising an item information acquisition unit (1112) configured to acquire operation setting item information about at least one item indicating the operation setting value of the control object device (400) from an outside,
wherein the setting data generator (111) is configured to generate the setting data file based on the operation setting item information acquired by the item information acquisition unit (1112).

3. The system according to any one of claims 1 to 2, wherein the setting data generator (111) is configured to generate a setting data file comprising one of (1) information about all items, (2) information about a predetermined part of items, and (3) information about a changed item as the setting data file based on an instruction from a user.

4. The system according to any one of claims 1 to 3, further comprising a change data generator configured to generate operation setting value change data directly changing the operation setting value of the control object device (400),
wherein the transmitter (112) is configured to transmit the operation setting value change data generated by the change data generator (111) to the control object device (400).

5. A programmable logic controller (PLC) control data generation method comprising the steps of:
generating a setting data file that is to be referred to by a function block (FB) in a PLC (200); and
transmitting the setting data file generated in the setting data generation step to the PLC (200),
wherein:
the setting data file generated in the setting data file generation step is usable by the FB that changes an operation setting value of a control object device (400) controlled by the PLC (200),
the FB transmits the setting data file to the control object device (400) and the control object device (400) rewrites the operation setting value of the control object device (400) based on the setting data file,
**characterized in that**
the FB changes the operation setting value during actual operation of the control object device (400) controlled by the PLC (200),
the step of generating the setting data includes a display input control step of displaying at least one item in the setting data file on a display screen and controlling setting of a value of the item by input from a user,
the control object device (400) is an IO-Link device (400),
the setting data file generation step comprises acquiring, from an outside, an IODD file which is related to the control object device (400) and in which, for each functional item of the control object device (400), a value settable for that functional item and a default operation setting value for that functional item are indicated, and
the display input control step comprises producing the setting data file from the acquired IODD file based on the input from the user.

## Patentansprüche

1. System, das eine Steuerdatenerzeugungsvorrichtung (100) für eine speicherprogrammierbare Steuerung (SPS), eine SPS (200), die einen Funktionsblock (FB) enthält, und eine Steuerobjektvorrichtung (400) aufweist, wobei die SPS-Steuerdatenerzeugungsvorrichtung (100) Folgendes aufweist:
einen Einstellungsdatengenerator (111), der eingerichtet ist, eine Einstellungsdatendatei zu erzeugen, auf die durch den Funktionsblock (FB) in der SPS (200) Bezug genommen werden kann; und
einen Sender (112), der eingerichtet ist, die durch den Einstellungsdatengenerator erzeugte Einstellungsdatendatei an die SPS (200) zu senden,
wobei:
die durch den Einstellungsdatengenerator (111) erzeugte Einstellungsdatendatei durch den FB verwendbar ist, welcher eingerichtet ist, einen Betriebseinstellungswert der durch die SPS (200) gesteuerten Steuerobjektvorrichtung (400) zu ändern,
der FB eingerichtet ist, die Einstellungsdatendatei an die Steuerobjektvorrichtung (400) zu senden, und die Steuerobjektvorrichtung (400) eingerichtet ist, den Betriebseinstellungswert der Steuerobjektvorrichtung (400) basierend auf der Einstellungsdatendatei neu zu schreiben,
**dadurch gekennzeichnet, dass**
der FB eingerichtet ist, den Betriebseinstellungswert während eines tatsächlichen Betriebs der durch die SPS (200) gesteuerten Steuerobjektvorrichtung (400) zu ändern,
der Einstellungsdatengenerator (111) eine Anzeigeeingabesteuerung (1111) aufweist, die eingerichtet ist, mindestens ein Element in der Einstellungsdatendatei auf einem Anzeigebildschirm anzuzeigen und eine Einstellung eines Werts des Elements durch eine Eingabe durch einen Benutzer zu steuern,
die Steuerobjektvorrichtung (400) eine IO-Link-Vorrichtung (400) ist,
der Einstellungsdatengenerator (111) ferner einen Eingabeausgabevorrichtungsbeschreibungs-(IODD)-Dateierfassungsprozessor (1112) aufweist, der eingerichtet ist, von einer Außenseite eine IODD-Datei zu erfassen, die sich auf die Steuerobjektvorrichtung (400) bezieht und in der für jedes Funktionselement der Steuerobjektvorrichtung (400) ein Wert, der für dieses Funktionselement einstellbar ist, und ein Standardbetriebseinstellungswert für dieses Funktionselement angegeben sind, und
die Anzeigeeingabesteuerung (1111) ferner eingerichtet ist, die Einstellungsdatendatei aus der IODD-Datei zu erzeugen, die durch den Dateierfassungsprozessor (1112) basierend auf der Eingabe durch den Benutzer erfasst wird.

2. System nach Anspruch 1, ferner aufweisend eine Elementinformationserfassungseinheit (1112), die eingerichtet ist, Betriebseinstellungselementinformationen über zumindest ein Element, das den Betriebseinstellungswert der Steuerobjektvorrichtung (400) angibt, von einer Außenseite zu erfassen,
wobei der Einstellungsdatengenerator (111) eingerichtet ist, die Einstellungsdatendatei basierend auf den durch die Elementinformationserfassungseinheit (1112) erfassten Betriebseinstellungselementinformationen zu erzeugen.

3. System nach einem der Ansprüche 1 bis 2, wobei der Einstellungsdatengenerator (111) eingerichtet ist, eine Einstellungsdatendatei zu erzeugen, die eines von (1) Informationen über alle Elemente, (2) Informationen über einen vorbestimmten Teil von Elementen und (3) Informationen über ein geändertes Element als die Einstellungsdatendatei basierend auf einer Anweisung von einem Benutzer aufweist.

4. System nach einem der Ansprüche 1 bis 3, ferner aufweisend einen Änderungsdatengenerator, der eingerichtet ist, Betriebseinstellungswertänderungsdaten zu erzeugen, die den Betriebseinstellungswert der Steuerobjektvorrichtung (400) direkt ändern,
wobei der Sender (112) eingerichtet ist, die durch den Änderungsdatengenerator (111) erzeugten Betriebseinstellungswertänderungsdaten an die Steuerobjektvorrichtung (400) zu senden.

5. Steuerdatenerzeugungsverfahren für eine speicherprogrammierbare Steuerung (SPS), das die folgenden Schritte aufweist:
Erzeugen einer Einstellungsdatendatei, auf die durch einen Funktionsblock (FB) in einer SPS (200) Bezug genommen werden kann; und
Senden der im Einstellungsdatenerzeugungsschritt erzeugten Einstellungsdatendatei an die SPS (200),
wobei:
die im Einstellungsdatendateierzeugungsschritt erzeugte Einstellungsdatendatei durch den FB verwendbar ist, welcher einen Betriebseinstellungswert einer durch die SPS (200) gesteuerten Steuerobjektvorrichtung (400) ändert,
der FB die Einstellungsdatendatei an die Steuerobjektvorrichtung (400) sendet und die Steuerobjektvorrichtung (400) den Betriebseinstellungswert der Steuerobjektvorrichtung (400) basierend auf der Einstellungsdatendatei neu schreibt,
**dadurch gekennzeichnet, dass**
der FB den Betriebseinstellungswert während eines tatsächlichen Betriebs der durch die SPS (200) gesteuerten Steuerobjektvorrichtung (400) ändert,
der Schritt des Erzeugens der Einstellungsdaten einen Anzeigeeingabesteuerungsschritt des Anzeigens mindestens eines Elements in der Einstellungsdatendatei auf einem Anzeigebildschirm und des Steuerns einer Einstellung eines Werts des Elements durch eine Eingabe durch einen Benutzer aufweist,
die Steuerobjektvorrichtung (400) eine IO-Link-Vorrichtung (400) ist,
der Einstellungsdatendateierzeugungsschritt das Erfassen einer IODD-Datei von einer Außenseite aufweist, die sich auf die Steuerobjektvorrichtung (400) bezieht und in der für jedes Funktionselement der Steuerobjektvorrichtung (400) ein Wert, der für dieses Funktionselement einstellbar ist, und ein Standardbetriebseinstellungswert für dieses Funktionselement angegeben sind, und
der Anzeigeeingabesteuerungsschritt das Erzeugen der Einstellungsdatendatei aus der erfassten IODD-Datei basierend auf der Eingabe durch den Benutzer aufweist.

## Revendications

1. Système comprenant un dispositif (100) de génération de données de commande de contrôleur logique programmable (PLC), un PLC (200) comprenant un bloc de fonction (FB) et un dispositif objet de commande (400), le dispositif (100) de génération de données de commande de PLC comprenant :
un générateur de données de réglage (111) configuré pour générer un fichier de données de réglage auquel le bloc de fonction (FB) doit se référer dans le PLC (200) ; et
un transmetteur (112) configuré pour transmettre le fichier de données de réglage généré par le générateur de données de réglage au PLC (200),
dans lequel :
le fichier de données de réglage généré par le générateur de données de réglage (111) est utilisable par le FB qui est configuré pour changer une valeur de réglage d'opération du dispositif objet de commande (400) commandé par le PLC (200),
le FB est configuré pour transmettre le fichier de données de réglage au dispositif objet de commande (400), et le dispositif objet de commande (400) est configuré pour réécrire la valeur de réglage d'opération du dispositif objet de commande (400) sur la base du fichier de données de réglage,
**caractérisé en ce que**
le FB est configuré pour changer la valeur de réglage d'opération pendant une opération réelle du dispositif objet de commande (400) commandé par le PLC (200),
le générateur de données de réglage (111) comprend un contrôleur d'entrée d'affichage (1111) qui est configuré pour afficher au moins un élément dans le fichier de données de réglage sur un écran d'affichage et pour commander le réglage d'une valeur de l'élément par une entrée d'un utilisateur,
le dispositif objet de commande (400) est un dispositif IO-Link (400),
le générateur de données de réglage (111) comprend en outre un processeur d'acquisition de fichier de description de dispositif d'entrée-sortie (IODD) (1112) configuré pour acquérir, depuis l'extérieur, un fichier IODD qui est lié au dispositif objet de commande (400) et dans lequel, pour chaque élément fonctionnel du dispositif objet de commande (400), une valeur réglable pour cet élément fonctionnel et une valeur de réglage d'opération par défaut pour cet élément fonctionnel sont indiquées, et
le contrôleur d'entrée d'affichage (1111) est en outre configuré pour produire le fichier de données de réglage à partir du fichier IODD acquis par le processeur d'acquisition de fichier (1112) sur la base de l'entrée de l'utilisateur.

2. Système selon la revendication 1, comprenant en outre une unité d'acquisition d'informations d'élément (1112) configurée pour acquérir des informations d'élément de réglage d'opération concernant au moins un élément indiquant la valeur de réglage d'opération du dispositif objet de commande (400) depuis l'extérieur,
dans lequel le générateur de données de réglage (111) est configuré pour générer le fichier de données de réglage sur la base des informations d'élément de réglage d'opération acquises par l'unité d'acquisition d'informations d'élément (1112).

3. Système selon l'une quelconque des revendications 1 à 2, dans lequel le générateur de données de réglage (111) est configuré pour générer un fichier de données de réglage comprenant l'une parmi (1) des informations concernant tous les éléments, (2) des informations concernant une partie prédéterminée d'éléments, et (3) des informations concernant un élément changé en tant que fichier de données de réglage sur la base d'une instruction provenant d'un utilisateur.

4. Système selon l'une quelconque des revendications 1 à 3, comprenant en outre un générateur de données de changement configuré pour générer des données de changement de valeur de réglage d'opération changeant directement la valeur de réglage d'opération du dispositif objet de commande (400),
dans lequel le transmetteur (112) est configuré pour transmettre les données de changement de valeur de réglage d'opération générées par le générateur de données de changement (111) au dispositif objet de commande (400).

5. Procédé de génération de données de commande de contrôleur logique programmable (PLC) comprenant les étapes consistant à :
générer un fichier de données de réglage auquel un bloc de fonction (FB) doit se référer dans un PLC (200) ; et
transmettre le fichier de données de réglage généré à l'étape de génération de données de réglage au PLC (200),
dans lequel :
le fichier de données de réglage généré à l'étape de génération de fichier de données de réglage est utilisable par le FB qui change une valeur de réglage d'opération d'un dispositif objet de commande (400) commandé par le PLC (200),
le FB transmet le fichier de données de réglage au dispositif objet de commande (400) et le dispositif objet de commande (400) réécrit la valeur de réglage d'opération du dispositif objet de commande (400) sur la base du fichier de données de réglage,
**caractérisé en ce que**
le FB change la valeur de réglage d'opération pendant une opération réelle du dispositif objet de commande (400) commandé par le PLC (200),
l'étape de génération des données de réglage comprend une étape de commande d'entrée d'affichage consistant à afficher au moins un élément dans le fichier de données de réglage sur un écran d'affichage et à commander le réglage d'une valeur de l'élément par une entrée d'un utilisateur,
le dispositif objet de commande (400) est un dispositif IO-Link (400),
l'étape de génération de fichier de données de réglage comprend l'acquisition, depuis l'extérieur, d'un fichier IODD qui est lié au dispositif objet de commande (400) et dans lequel, pour chaque élément fonctionnel du dispositif objet de commande (400), une valeur réglable pour cet élément fonctionnel et une valeur de réglage d'opération par défaut pour cet élément fonctionnel sont indiquées, et
l'étape de commande d'entrée d'affichage comprend la production du fichier de données de réglage à partir du fichier IODD acquis sur la base de l'entrée de l'utilisateur.
